# EUROPÄISCHE PATENTSCHRIFT

(11) **EP 3 360 642 B1**
(45) Veröffentlichungstag und Bekanntmachung des Hinweises auf die Patenterteilung: **04.11.2020**
(21) Anmeldenummer: 17155924.8
(22) Anmeldetag: 13.02.2017
(51) Int. Cl.: B23Q 17/00, B23Q 17/09

(54) **SPINDELNASE MIT MESSFUNKTION**
SPINDLE NOSE WITH MEASURING FUNCTION
NEZ DE BROCHE AYANT UNE FONCTION DE MESURE

(43) Veröffentlichungstag der Anmeldung: 15.08.2018
(73) Patentinhaber: pro-micron GmbH, 87600 Kaufbeuren (DE)
(72) Erfinder: RUF, Daniel, 87600 Kaufbeuren (DE); WUNDERLICH, Rainer, 87600 Kaufbeuren (DE)
(74) Vertreter: Raffay & Fleck

(56) Entgegenhaltungen:
- EP-A1- 1 764 186
- EP-A1- 2 156 924
- EP-A1- 2 759 369
- EP-A2- 2 829 859
- DE-A1- 10 351 347
- JP-A- 2000 079 537

## Beschreibung

Die Erfindung betrifft eine Spindelnase für eine Werkzeugspindel einer Werkzeugmaschine mit den Merkmalen des Oberbegriffs des Anspruchs 1 (siehe z.B. DE10351347). Sie betrifft ferner eine Werkzeugspindel mit einer derartigen Spindelnase.

In der Materialbearbeitung und der Werkstückproduktion werden die Anforderungen an die Genauigkeit und Maßhaltigkeit der in Werkzeugmaschinen ausgeführten Bearbeitungsschritte immer höher, es werden immer engere Toleranzen verlangt. Darüber hinaus besteht nach wie vor ein großer Bedarf an einer fortschreitenden Automatisierung beim Betrieb der Werkzeugmaschinen, einer weiteren Reduzierung der Erforderlichkeit des Eingreifens durch einen Maschinenführer und damit einhergehend einer möglichst umfangreichen Überwachung des Arbeitsprozesses der Werkzeugmaschine.

Dabei ist es bekannt, das Verhalten in einer Werkzeugspindel aufgenommener Werkzeuge im Hinblick auf auftretende Kräfte und/oder Biegemomente mit mittels Messtechnik ausgewerteten Sensorelementen in Echtzeit während des Bearbeitungsprozesses zu überwachen. Hierfür werden beispielsweise auf einer Mantelfläche eines Werkzeughalters aufgebrachte DMS-Sensoren eingesetzt, wie dies in der DE 9014037 U1 gezeigt und beschrieben ist. Auch in der EP 2103379 A1 ist ein vergleichbares Vorgehen beschrieben. Dort ist ein Adapterstück offenbart, welches in einer Werkzeugspindel einer Werkzeugmaschine eingesetzt und dort fixiert wird und welches dann wiederum ein Werkzeug aufnimmt. Dieses Adapterstück ist mit Dehnungsmessaufnehmern versehenen, die drahtlos die gemessenen Werte an eine an einem Stator angeordnete Empfangseinrichtung übermitteln. Mit den in den beiden vorstehend genannten Druckschriften gezeigten Messeinrichtungen sollen kritische Kräfte bzw. Momente ermittelt werden, um festzustellen, wann zum Beispiel ein Verschleiß des genutzten Werkzeugs auftritt und dieses gewechselt werden muss, um die Bearbeitungsqualität zu erhalten.

Eine andere Nutzung von in Werkzeugspindeln angeordneten Messsensoren ist in der EP 1889685 B1 beschrieben und offenbart. Dort wird mithilfe entsprechender Sensoren - insbesondere bei stillstehender Werkzeugspindel - festgestellt, ob in der Werkzeugaufnahme der Werkzeugspindel ein Fremdteilchen, insbesondere ein Span, befindlich ist, das zu einer nicht exakten Positionierung des eingesetzten und in der Werkzeugspindel arretierten Werkzeuges führt. Denn derartige Fehler in der Ausrichtung, die durch zum Beispiel beim Werkzeugwechsel in den Bereich der Werkzeugspindel geratene Späne hervorgerufen werden können, führen zu einer nicht exakten Ausrichtung von zum Beispiel Schneiden des Werkzeuges, was zu Abweichungen des Bearbeitungsergebnisses bis hin zu einem vollständigen Ausschuss der mit der Werkzeugmaschine bearbeiteten bzw. hergestellten Werkstücke führen kann.

Die im Stand der Technik aufgezeigten Möglichkeiten und Lösungen haben sich grundsätzlich bewährt, allerdings decken Sie jeweils nur die Erfassung spezifischer Werte und Parameter ab, können insbesondere entweder das Vorhandensein eines Fremdkörpers in der Werkzeugaufnahme der Werkzeugspindel feststellen oder aber auftretende Abweichungen hinsichtlich von Kräften oder Biegemomenten, die zum Beispiel auf einen Verschleiß des Werkzeuges und damit das Erfordernis eines Werkzeugwechsels hindeuten. Dabei ist insbesondere auch der Umstand, dass nach dem aus der EP 2103379 A1 bekannten Vorgehen zum Messen von Kräften und Momenten ein raumgreifendes Adapterstückes zwischen die Werkzeugspindel und das eigentliche Werkzeug zu setzen ist, als nachteilig aufzufassen. Zum einen bietet nicht jede Werkzeugmaschine ausreichend Bauraum, um ein solches Adapterstückes vorsehen zu können. Zum anderen führt ein solches zwischengeschaltetes Adapterstückes zu einer potentiell vergrößerten Ungenauigkeit hinsichtlich der korrekten und exakten Einbaulage des Werkzeuges, da die Herstellungstoleranzen es Adapterstückes sich zu den möglichen Maßabweichungen der Werkzeugspindel an sich, die hochpräzise gefertigt sein muss, addieren, so dass es hier zu einer höheren Toleranzabweichung kommen kann. Außerdem können so nur diejenigen Prozesse überwacht werden, bei denen ein mit Sensorik bestückter Werkzeughalter in die Motorspindel eingewechselt wurde. Zur vollständigen Überwachung aller Bearbeitungsprozesse müssten also alle Werkzeughalter mit einer entsprechenden Sensorik ausgerüstet werden, was einen hohen Aufwand und große Kosten nach sich ziehen würde.

Ausgehend von dem bekannten Stand der Technik und vor dem Hintergrund der oben geschilderten Probleme desselben, ist es Aufgabe der vorliegenden Erfindung, die Sensorik einer Werkzeugspindel dahingehend zu verbessern, dass mit ihr ohne das Erfordernis des Einbringens eines Adapterstückes eine größere Zahl von Parametern bzw. Zuständen, insbesondere für alle Prozesse, die mit dieser Werkzeugspindel durchgeführt werden, automatisiert überwacht werden können. Insbesondere soll mit der Sensorik sowohl eine Überwachung des korrekten Sitzes eines eingewechselten Werkzeuges als auch eine Aufnahme von während des Bearbeitungsprozesses auf dem Werkzeug lastenden Querkräften bzw. Biegemomenten möglich sein. Mit Vorteil soll die Sensorik in der Spindelnase, also demjenigen Teilelement der Werkzeugspindel, das dem Werkzeug zugewandt auf dem Rotor der Werkzeugspindel vorderseitig angeordnet ist, integriert sein.

Diese Aufgabe wird erfindungsgemäß gelöst durch eine Spindelnase einer Werkzeugspindel einer Werkzeugmaschine mit den Merkmalen des Patentanspruchs 1. Vorteilhafte Weiterbildungen einer solchen Spindelnase sind in den Ansprüchen 2 bis 13 bezeichnet. Einen weiteren Lösungsaspekt bildet eine Werkzeugspindel für eine Werkzeugmaschine mit den Merkmalen des Anspruchs 14, die eine wie erfindungsgemäß gestaltete Spindelnase aufweist.

Erfindungsgemäß weist die Spindelnase für eine Werkzeugspindel einer Werkzeugmaschine eine Längsachse auf sowie ein Aufnahmeende. An dem Aufnahmeende mündet eine sich in Richtung der Längsachse und von dem Aufnahmeende weg konisch verjüngende Kegelaufnahme für die Aufnahme eines Werkzeugschaftkegels. Diese Kegelaufnahme ist von einer umlaufenden Wand umgeben, die am Aufnahmeende einen umlaufenden, insbesondere kreisförmig umlaufenden, Anlagerand ausbildet. Der Anlagerand weist dabei Plananlageflächen auf, an denen Anlagerflächen des Werkzeugschaftkegels bei in der Werkzeugspindel eingespanntem Werkzeug anliegen. Insoweit entspricht die Spindelnase in ihren Merkmalen den Stand der Technik und den dort vorbekannten und vorgeschriebenen Spindelnasen. Das Besondere an der erfindungsgemäßen Spindelnase ist nun, dass in der die Kegelaufnahme umgebenden Wand Aufnahmebohrungen in Form von senkrecht zu den Plananlageflächen geführten, unterhalb der Plananlageflächen endenden Sacklochbohrungen gebildet sind, von denen in jedem von wenigstens vier winkelgleichen Segmenten, in die der Anlagerand unterteilt ist, jeweils eine solche Sacklochbohrung vorliegt. Die Unterteilung des Anlagerandes in die wenigstens acht winkelgleichen Segmente ist dabei nicht etwa zwingend durch besondere Strukturen oder Elemente erkennbar vorgegeben, die Segmente können auch als virtuelle Segmente aufgefasst werden, die in einer Art Raster über den Aufnahmerand gelegt werden können, ohne dass sich diese Segmente unmittelbar physisch auf dem Anlagerand abbilden.

Erfindungswesentlich ist weiterhin, dass sich je zwei so gebildete Aufnahmebohrungen diametral gegenüberliegen, was insbesondere dann, wenn die Sensoren in Vollbrücken ausgewertet werden, in einer paarweisen Zuordnung geschehen kann. Mit anderen Worten gibt es wenigstens zwei Paare aus Aufnahmebohrungen, wobei sich in jedem der Paare die zwei so zusammengefassten Aufnahmebohrungen entlang eines Durchmessers des kreisförmigen Anlagerandes gegenüber liegen. Weiterhin ist in jede dieser Aufnahmebohrungen ein für in Richtung der Erstreckung der Aufnahmebohrung auftretende Kräfte und/oder Verformungen empfindlicher, abhängig von derartigen Kräften und/oder Verformungen einen Messwert einer Messgröße, insbesondere seinen elektrischen Widerstand, ändernder Sensor angeordnet. Ferner ist eine Auswertung vorgesehen, die zum Beispiel in einer in der Spindelnase integrierten logischen Verschaltung oder einer dort angeordneten prozessorgesteuerten Rechnereinheit bestehen kann, die prinzipiell aber auch außerhalb der Spindelnase vorgesehen und die Signale der Sensoren, insbesondere drahtlos, empfangen und verarbeiten kann, und in der die Sensoren derart ausgewertet werden, dass sie bei einer in Richtung entlang der Längsachse weisenden auflastenden Kraft bzw. Verformung einen Beitrag des Messwertes mit unterschiedlichen mathematischen Vorzeichen liefern. Dabei können insbesondere wenigstens zwei in einander gegenüberliegenden ersten Segmenten angeordnete Sensoren einen Beitrag mit einem ersten Vorzeichen, + bzw. -, liefern, wobei wenigstens zwei in einander gegenüberliegenden zweiten, von den ersten Segmenten (I, II, V, VI) verschiedenen Segmenten angeordnete Sensoren einen Beitrag mit einem zweiten, zu dem ersten Vorzeichen entgegengesetztem Vorzeichen,. - bzw. +, liefern.

Insbesondere können dabei auch wenigstens zwei in aneinander angrenzenden ersten Segmenten angeordnete Sensoren einen Beitrag mit einem ersten Vorzeichen, + bzw. -, liefern, wobei wenigstens zwei in einander angrenzenden zweiten, von den ersten Segmenten verschiedenen Segmenten angeordnete Sensoren einen Beitrag mit einem zweiten, zu dem ersten Vorzeichen entgegengesetztem Vorzeichen, - bzw. +, liefern.

Mit einer wie vorstehend beschriebenen, spezifischen Verschaltung, insbesondere auch in den möglichen Ausgestaltunsvarianten, ist es nun möglich, einerseits im dynamischen Betrieb, das heißt bei rotierender Werkzeugspindel bzw. Spindelnase, durch das Auftreten von Kräften quer zu der Längsrichtung, also auch quer zu einer Werkzeuglängsachse, hervorgerufene Biegemomenten festzustellen, so dass hier eine dynamische Überwachung des Werkzeugverhaltens bei einem mit einer erfindungsgemäßen Spindelnase aufweisenden Werkzeugspindel ausgerüsteten Werkzeugmaschine durchgeführten Bearbeitungsvorgang eines Werkstückes erhalten werden kann. So kann z.B. durch Auswertung der auftretenden Biegemomente, z.B. im Vergleich mit einem Langzeitverhalten ein Bruch oder Verschleiß eines Werkzeuges festgestellt und ein Auswechseln desselben veranlasst werden. So wird Ausschuss von nicht den Anforderungen genügenden Werkstücken vermieden. Ein Biegemoment kann natürlich auch bei stillstehender Werkzeugspindel festgestellt werden, z.B. als Folge von Kollisionen von Werkstück und Werkzeug.

Eine entsprechende Auswertung der mit der erfindungsgemäßen Spindelnase erfassten Biegemomente kann z.B. entsprechend der in der EP 2924526 A1 beschriebenen Vorgehensweise erfolgen.

Weiterhin kann die wie vorstehend beschriebene spezifische Verschaltung der Sensoren bei entsprechender Auswertung nach zeitlichem Ablauf (nämlich im zeitlichen Zusammenhang mit einem Einspannvorgang eines Werkzeuges) auch ermöglichen, die durch einen Fremdkörper, zum Beispiel einen Span im Bereich der Werkzeugaufnahme der Spindelnase bzw. der mit dieser ausgestatteten Werkzeugspindel hervorgerufene Abweichung der sich durch einen Andruck der Anlageflächen des Werkzeugschaftkegels an der Plananlage ergebenden Andruckkräfte, insbesondere eine sich dabei typischerweise ausbildende Asymmetrie, zu erfassen. Dies kann insbesondere, aber nicht nur, bei stehendem Werkzeug, also nicht rotierender Werkzeugspindel erfolgen. Denn eine ungleichmäßige Druckbelastung der in den unterschiedlichen Segmenten angeordneten Sensoren wird auch durch die wie oben beschriebene Auswertung in Form eines bei additiver Verknüpfung der Sensorsignale als von "null" abweichender Messwert festgestellt. Durch die Auswertung kann hier ein Ausschlag, also eine Abweichung des Summensignals außerhalb einer Toleranzgrenze festgestellt und, wenn dies zeitlich in Folge eines Einspannvorganges eines Werkzeuges auftritt, als Ereignis "nicht korrekt eingespanntes Werkzeug" bzw. "Span in der Werkzeugspindel" ausgewertet werden.

Dabei ist die erfindungsgemäße Messtechnik durch die Anordnung der Sensoren in den als unterhalb der Plananlageflächen endenden Sacklochbohrungen ausgebildeten Aufnahmebohrungen in der Spindelnase integriert, wie sie ohnedies Bestandteil der Werkzeugspindel ist, so dass das zusätzliche Anbringen eines Adapterstückes entfällt, kein zusätzlicher Bauraum erforderlich ist und auch kein Verlust der Maßhaltigkeit der Werkzeugeinspannung entsteht. Insbesondere können auch existierende Spindelnasen von bestehenden Werkzeugspindeln durch entsprechende Nachbearbeitung mit einer nach dem erfindungsgemäßen Prinzip wirkenden Sensorik nachgerüstet werden, oder es können bei Werkzeugspindeln bestehende Spindelnasen durch erfindungsgemäß gestaltete Spindelnasen ersetzt werden, so dass auch bei bestehenden Werkzeugmaschinen mit existierenden Werkzeugspindeln und Spindelnasen die mit der vorliegenden Erfindung erstmals in einem System ermöglichten verschiedenen Mess- bzw. Überwachungsfunktionen integriert werden können. Die besondere Anordnung der Sensoren in den Sacklochbohrungen führt zu einer besonders empfindlichen Sensorik, da diese sehr nah und unmittelbar an das mit Kräften bzw. Biegemomenten belasteten Werkzeug herangeführt werden und dort Messwerte aufnehmen können.

An dieser Stelle gilt es zu betonen, dass die Erfindung nicht auf die Anordnung von vier Sensoren in auf vier Segmente verteilten Aufnahmebohrungen beschränkt ist. Es können z.B. auch sechs, acht oder auch mehr, z.B. 12, 16 oder sogar noch mehr, Sensoren auf in entsprechend eingeteilte Segmente verteilte Aufnahmebohrungen verteilt angeordnet und entsprechend in der Auswertung verknüpft ausgewertet werden.

Als Sensoren kommen insbesondere in ihrem elektrischen Widerstand veränderliche Dehnungsmesssensoren (DMS), hier insbesondere solche in Zylinderform, in Betracht. Es können aber auch nach anderen Messprinzipien arbeitenden Sensoren eingesetzt werden, zum Beispiel SAW-Bauteile oder auch kapazitive Dehnungsmesssensoren.

Die Auswertung kann insbesondere auch durch Brückenschaltungen erfolgen, in denen die Sensoren so zusammengefasst werden, dass die vorstehend beschriebene Vorzeichenbedingung erfüllt ist. Denkbar sind hier elektrische Verschaltungen zu Halb- oder auch Vollbrücken. Bei einer Verschaltung zu Halbbrücken werden zur Umsetzung der Erfindung zwei in einander gegenüberliegenden Segmenten angeordnete Sensoren zu einer solchen Halbbrücke verschaltet. Solche Brückenschaltungen haben gegenüber prinzipiell auch denkbaren digitalen Verschaltungen (z.B. "virtuelle Brückenschaltungen") den Vorteil, dass sie keine Empfindlichkeit auf etwaige Leitungswiderstände und sich dadurch in eine rechnerische Verknüpfung einschleichende Fehler sind.

In einer möglichen und derzeit bevorzugten Weiterbildung der Erfindung ist der Anlagerand in wenigstens acht winkelgleiche Segmente unterteilt und ist in jedem der Segmente wenigstens eine Aufnahmebohrung derart gebildet, dass sich je zwei so gebildete Aufnahmebohrungen paarweise diametral gegenüberliegen. In jeder der Aufnahmebohrungen ist je ein für in Richtung der Erstreckung der Aufnahmebohrung auftretende Kräfte und/oder Verformungen empfindlicher, abhängig von derartigen Kräften und/oder Verformungen eine elektrische Messwertausgabe, insbesondere seinen elektrischen Widerstand, ändernder Sensor angeordnet. In der Auswertung werden je vier der Sensoren in einer solchen Weise zu einer Vollbrücke verschaltet ausgewertet, dass in je zwei einander diametral gegenüberliegenden Aufnahmebohrungen in paarweise benachbarten Segmenten angeordnete Sensoren in den parallelen Zweigen der Vollbrücke geschaltet sind. Mit anderen Worten wird eine Vollbrücke, so zum Beispiel und insbesondere eine Wheatstone'sche Brücke, gebildet aus zwei in Aufnahmebohrungen aus benachbarten Segmenten angeordneten Sensoren und Sensoren, die in den zu diesen Aufnahmebohrungen jeweils diametral gegenüberliegend angeordneten Aufnahmebohrungen angeordnet sind. Erfindungsgemäß erfolgt die Verschaltungen der Sensoren in den parallelen Zweigen der Vollbrücke wie folgt:
In einem ersten Zweig der Vollbrücke sind ein in einer ersten der Aufnahmebohrungen angeordneter erster Sensor und ein in einem zu dem Segment, in dem ein in einer zweiten der ersten Aufnahmebohrung diametral gegenüberliegenden zweiten der Aufnahmebohrungen aufgenommener zweiter Sensor angeordnet ist, benachbarten Segment gelegenen dritten der Aufnahmebohrungen angeordneter dritter Sensor in Reihe geschaltet. In einem zweiten Zweig der Vollbrücke ist, parallel zu den ersten Sensor, ein in einer der ersten Aufnahmebohrungen diametral gegenüberliegenden vierten der Aufnahmebohrungen angeordneter vierter Sensor mit dem zweiten Sensor in Reihe geschaltet, wobei der zweite Sensor dann parallel zu dem dritten Sensor in der Vollbrücke angeordnet ist.

Auf diese Weise werden bei einer Anordnung von acht Sensoren in acht Aufnahmebohrungen zwei Vollbrücke geschaffen, die durch die wie oben beschriebene Verschaltungen vier benachbarte Segmente ergeben, in denen eine Verformung in einer axialen Richtung, zu Beispiel eine Stauchung, der Sensoren einen Einfluss auf eine Spannungsveränderung der Brückenschaltung mit negativem Vorzeichen ergibt, wohingegen die vier weiteren benachbarten Segmente bei einer Verformung in gleicher axialer Richtung, also einer Stauchung, eine Spannungsveränderung der Brückenschaltung mit positivem Vorzeichen bewirken.

Insbesondere können bei einer erfindungsgemäßen Spindelnase die Aufnahmebohrungen in der Längsrichtung verlaufen, wenn nämlich, wie dies typischerweise der Fall ist, die Plananlageflächen senkrecht zur Längsrichtung der Spindelnase verlaufen. An dieser Stelle gilt es hervorzuheben, dass der Begriff "Plananlageflächen" nicht zwingend eine physische Trennung zwischen den einzelnen Plananlageflächen voraussetzt, wie sie bei vielen Spindelnasen gegeben ist, bei denen entlang des Umfanges des Anlagerandes separiert ausgebildete Plananlageflächen vorhanden sind, die durch andere Strukturen unterbrochen sind. Auch eine über den gesamten Anlagerand durchlaufend gebildete Plananlagefläche bildet im Sinne der Erfindung Plananlageflächen aus, wobei dies dann in den verschiedenen Segmenten angeordnete Abschnitte der durchgehenden Plananlagefläche sind.

Insbesondere und mit Vorteil liegen bei der erfindungsgemäßen Spindelnase die Aufnahmebohrungen so, dass sie mit ihren Mittelachsen eine gemeinsame Umfangslinie eines zu einer Mittellängsachse der Spindelnase konzentrischen Kreises (der in einer zu der Mittellängsachse senkrechten Ebene liegt) schneiden. Auf diese Weise wird eine für eine Auswertung der Sensoren durch die Brückenschaltungen vorteilhafte symmetrische Anordnung der Sensoren um die Mittelängsachse der Spindelnase erreicht. Zudem können, auch dies mit besonderem Vorteil, die Aufnahmebohrungen derart angeordnet sein, dass die Mittelachsen benachbarter Aufnahmebohrungen die genannte Umfangslinie unter gleichen Winkelabständen schneiden. Auch diese besondere Anordnung führt zu einer erhöhten Symmetrie, was für die Auswertung der mit den Sensoren festgestellten Messergebnisse von besonderem Vorteil ist.

Ebenfalls aus Gründen der Symmetrie und der dadurch erzielten guten Ausführbarkeit und hohen Empfindlichkeit der durch die Sensoren gebildeten Messsensorik ist es von Vorteil, wenn die Sensoren solche von identischer Art sind. Die Sensoren sind mit Vorteil also solche gleicher Bauart und identischer Empfindlichkeit, so dass im Idealfall in einer Brückenschaltung bei einer gleichmäßigen axialen Belastung die Messwerte der Sensoren zu keiner Verstimmung der Brücke, also zu einem Brückensignal "0", führen.

Mit Vorteil sind die Sensoren zylinderförmige Dehnungssensoren, die Verformungen in ihrer axialen Richtung, bzw. eine Kraftbeaufschlagung in dieser Richtung, detektieren. Insbesondere sind die zylinderförmigen Dehnungssensoren in ihrem Zylinderdurchmesser so bemessen, dass sie passgenau in die Aufnahmebohrungen eingesetzt sind (bzw. sind die Aufnahmebohrungen so gestaltet, dass ihr Durchmesser dem Durchmesser der zylinderförmigen Dehnungssensoren entsprechen), so dass die Sensoren in den Aufnahmebohrungen mit einfachen Mitteln positionsgenau festgelegt werden können.

Es liegt auch im Rahmen der Erfindung, dass die Spindelnase neben den in den Aufnahmebohrungen angeordneten Sensoren weitere, in Sacklochbohrungen, die senkrecht zu den Plananlageflächen geführt sind und von der dem Aufnahmeende gegenüberliegenden Seite an die Plananlageflächen heranreichen, angeordnete zusätzliche Messfühler aufweist, die unabhängig von den Sensoren dem Erfassen weiterer Messgrößen dienen und entsprechend geschaltet sind. Mit solchen zusätzlichen Messfühlern können zum Beispiel durch eine entsprechende Verschaltung auf dem Werkzeug lastende Axialkräfte bestimmt werden, so dass auch dieser Parameter beim Betrieb der die erfindungsgemäße Spindelnase aufweisenden Werkzeugmaschine erfasst und zum Beispiel zum Erkennen eines Werkzeugverschleißes ausgewertet werden können.

Um die von der Spindelnase erfassten Daten auswerten zu können, ist es von Vorteil, wenn an der Spindelnase Übertragungsmittel zum drahtlosen Übertragen von mit den Sensoren und gegebenenfalls weiteren angeordneten Messfühlern erfassten Messdaten an eine außerhalb der Spindelnase angeordnete Empfängereinheit angeordnet sind. Eine solche drahtlose Übertragung ist gegenüber einer drahtgebundenen Übertragung, die dann über eine Drehdurchführung von dem rotierenden Element der Werkzeugspindel zu dem Stator übertragen wäre, deutlich zu bevorzugen. Eine entsprechende telemetrische Datenübermittlung kann zum Beispiel mittels RFID-Technik oder dergleichen erfolgen.

Auch eine Energieversorgung für die auf der Spindelnase angeordneten Sensoren und gegebenenfalls weiterer dort vorgesehener Verbraucher kann mit Vorteil drahtlos geschehen, zum Beispiel durch Induktion. Alternativ oder zusätzlich kann an der Spindelnase aber auch ein Energiespeicher vorgesehen sein, der die Sensoren und gegebenenfalls andere Verbraucher mit elektrischer Energie versorgt. Ein solcher Energiespeicher kann ein Akkumulator oder eine Batterie oder auch ein Kondensator oder vergleichbares sein.

Insbesondere wird bei der Konzeption der Spindelnase darauf zu achten sein, dass durch die angeordneten Sensoren und weiteren Elemente und durch die eingebrachten Aufnahmebohrungen und gegebenenfalls weiteren Sacklochbohrungen keine Unwuchten erzeugt werden, die einen Rundlauf der Spindelnase bei hohen Drehzahlen der Werkzeugspindel beeinträchtigen könnten.

Die für die Aufnahme der Sensoren als Sacklochbohrungen ausgeführten Aufnahmebohrungen müssen, damit die auf den Plananlageflächen auflastenden Druckkräfte von den Sensoren noch erfasst werden können, die Sensoren mit einer hohen Genauigkeit entsprechende Kräfte bzw. Verformungen aufnehmen, bis nah unterhalb die Plananlageflächen geführt werden. Dabei sollte der jeweilige Sensor, also die Sacklochbohrung, so nah wie möglich von der Rückseite her an die Plananlagefläche herangeführt werden. Andererseits dürfen die Sacklockbohrungen die Stabilität und die Exaktheit der Flächenausrichtung der Plananlageflächen nicht stören. Die Plananlagefläche muss insbesondere unter den rauen Betriebsbedingungen mechanisch stabil bleiben. Entsprechend sind bei der Auslegung die zu erwartenden Betriebsbedingungen und ist auch die Geometrie der Spindelnase, insbesondere im Bereich der Plananlageflächen, zu berücksichtigen. Beispielweise können die Aufnahmebohrungen 3 bis 15 mm unterhalb der Plananlageflächen enden.

Schließlich ist zu erwähnen, dass die erwähnte Verschaltung zu den Vollbrücken hart verdrahtet erfolgen kann, dass aber auch eine umschaltbare Verschaltung möglich ist, so dass die Sensoren z.B. nicht nur in Vollbrücken, sondern auch in Halb- oder Viertelbrücken verschaltet werden können oder auch Brückenschaltungen mit einer anderen Verknüpfung der Sensoren erhalten werden können, um z.B. mit den Sensoren andere Größen erfassen und auswerten zu können, z.B. auftretende Axialkräfte.

Weitere Vorteile und Merkmale der Erfindung ergeben sich aus der nachfolgenden Beschreibung von Ausführungsbeispielen anhand der beigefügten Figuren. In den Figuren zeigen:
- Fig. 1: eine Aufsicht auf eine mögliche Ausgestaltungsform einer erfindungsgemäßen Spindelnase von dem Aufnahmeende her, wobei hier auch Positionen von unterhalb der Oberfläche angeordneten Sensoren und Messfühlern eingezeichnet sind;
- Fig. 2: eine rückwärtige Ansicht der Spindelnase aus Fig. 1;
- Fig. 3: eine entlang einer Radiallinie genommene Längsschnittansicht eines Details der Spindelnase aus Fig. 1;
- Fig. 4: eine entlang einer Sekantenlinie genommene Schnittansicht eines Details der Spindelnase aus Fig. 1;
- Fig. 5: eine schematische Darstellung einer Vollbrücke, in der die Sensoren der Spindelnase aus Fig. 1 zur Signalauswertung verschaltet sind;
- Fig. 6: eine Darstellung von bei einer nicht ordnungsgemäßen Einspannung eines Werkzeuges, wie sie z.B. aufgrund eines in der Werkzeugaufnahme befindlichen Fremdkörpers, wie z.B. eines Spans, auftritt, von den Sensoren in den Segmenten erhaltenen Signalen und
- Fig. 7: eine Darstellung der Signale nach Fig. 6 nach deren Beträgen zur besseren Verdeutlichung der aufgrund der Fehleinspannung auftretenden Unterschiede der Sensorsignale aus den unterschiedlichen Segmenten.

In den Figuren ist zunächst schematisch und in verschiedenen Ansichten ein mögliches Ausführungsbeispiel für eine erfindungsgemäße Spindelnase dargestellt und allgemein mit dem Bezugszeichen 1 bezeichnet. Diese Darstellung erhebt aber keinen Anspruch auf Vollständigkeit hinsichtlich sämtlicher Merkmale dieser Spindelnase 1, sondern ist lediglich als Veranschaulichung zur Verdeutlichung der erfindungswesentlichen und weiterer besonders vorteilhafter Merkmale zu verstehen.

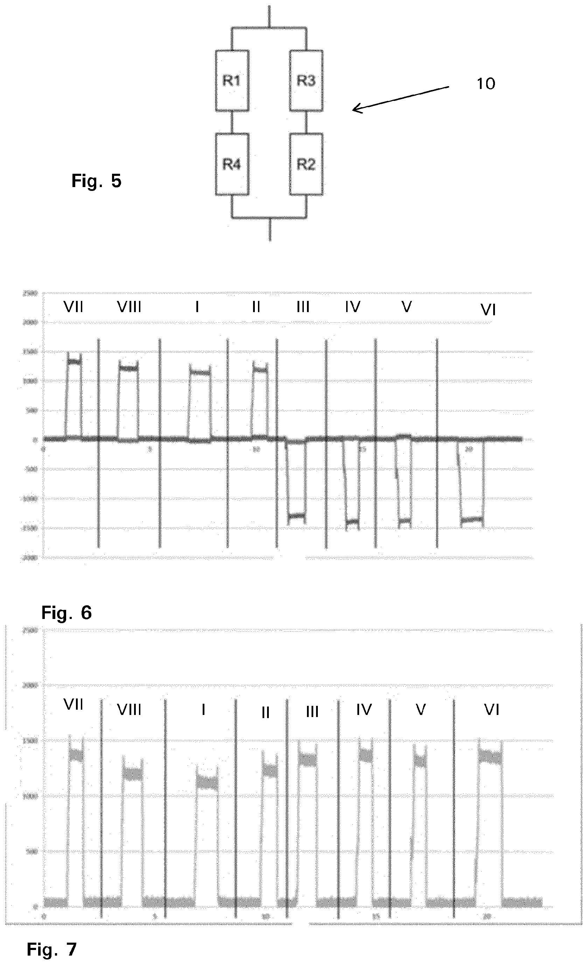

Weitere Figuren veranschaulichen die erfindungsgemäße Verschaltungen zu einer Vollbrücke (Figur 5) sowie die Auswertung der Sensordaten zur Feststellung einer Fehleinspannung eines Werkzeuges im statischen Zustand der Spindelnase 1 bzw. einer mit dieser versehenen Werkzeugspindel.

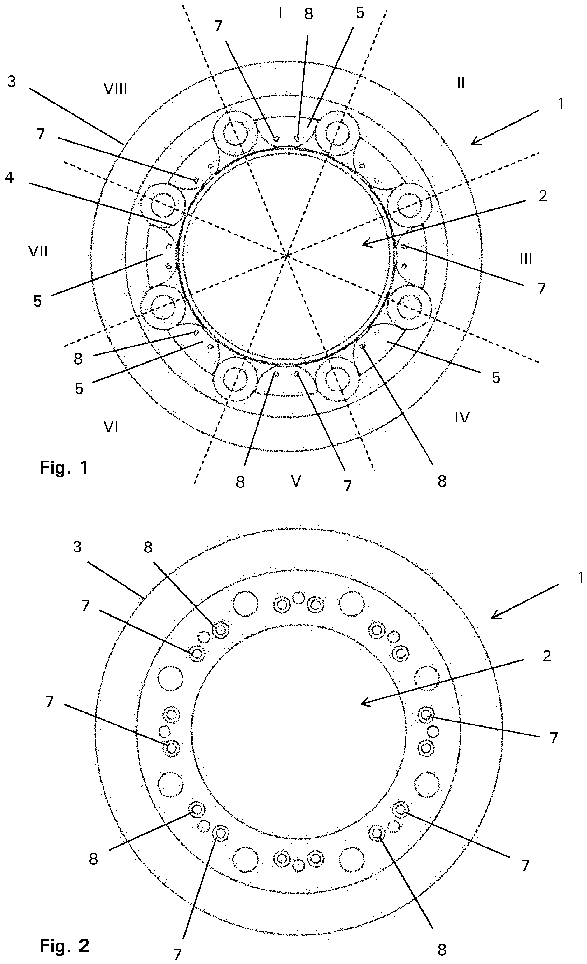

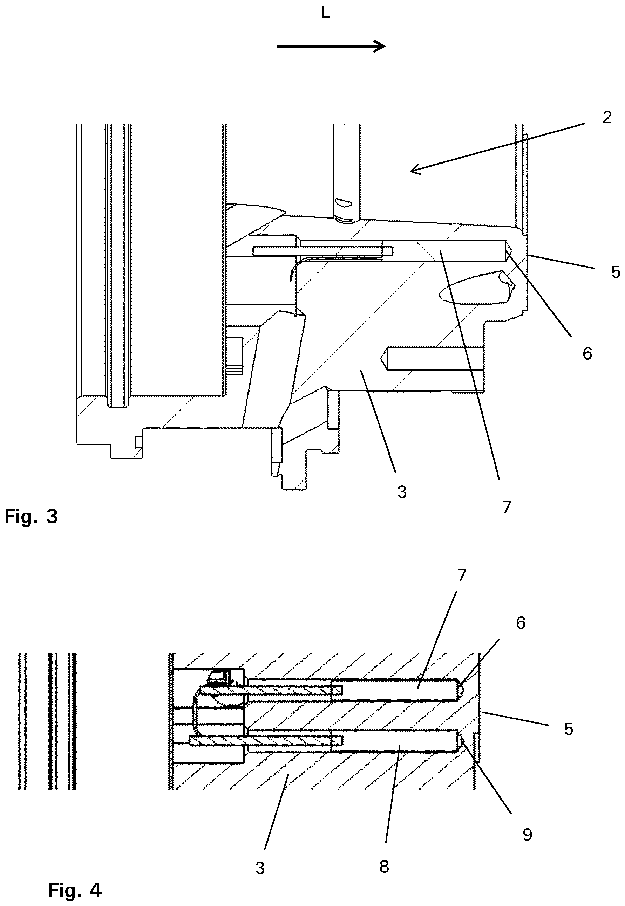

Zunächst wird hier auf die Figuren Ziffer 1 bis 4 Bezug genommen, die in verschiedenen Ansichten zeichnerische Darstellungen eines möglichen Ausführungsbeispiels einer erfindungsgemäßen Spindelnase 1 wiedergeben. Die Spindelnase 1 ist allgemein ringförmig gebildet mit einem im Zentrum derselben gelegenen, sich in einer Längsrichtung L bzw. in Richtung der Längsachse (vergleiche Figur 3) erstreckenden Kegelaufnahme 2. Figur 1 zeigt eine Ansicht auf die Spindelnase 1 von einer Vorderseite bzw. einem Aufnahmeende her, Figur 2 gibt eine rückseitige Ansicht wieder. Die Figuren 3 und 4 enthaltenen Schnittdarstellungen von Details, wobei in diesen Figuren das Aufnahmeende der Spindelnase 1 rechts gelegen dargestellt ist. In Figur 3 ist insbesondere gut zu erkennen, dass sich die Kegelaufnahme 2 ausgehend von dem Aufnahmeende in Richtung des rückwärtigen Endes konisch verjüngt, wie dies für entsprechende Werkzeugaufnahmen an Werkzeugspindeln bzw. Spindelnasen üblich ist.

Umgeben ist die Kegelaufnahme 2 von einer Wand 3, die in dem gezeigten Ausführungsbeispiel einen insgesamt stufenförmigen Verlauf nimmt. Diese Wand 3 bildet zum Aufnahmeende hin einen umlaufenden Anlagerand 4, an dem Plananlageflächen 5 geformt sind für die Anlage entsprechender Anlageflächen, die typischerweise an einem Kragen eines Werkzeugschaftes zu diesem Zweck gebildet sind. Die Plananlageflächen 5 sind in dem gezeigten Ausführungsbeispiel separat voneinander ausgebildet und jeweils etwa halbkreisförmig geformt. Die Gestaltung der Plananlageflächen 5 ist dabei nicht auf diese Form beschränkt. Es kann zum Beispiel auch eine durchgehende, über den gesamten Anlagerand 4 verlaufende Plananlagefläche 5 vorgesehen sein. Wie in Figur 1 angedeutet, lässt sich der Anlagerand 4 mit den Plananlageflächen 5 in hier insgesamt acht Segmente unterteilen, die in der Figur mit I bis VIII im Uhrzeigersinn verlaufend durchnummeriert sind. In dem hier gezeigten Ausführungsbeispiel liegt in jedem der acht Segmente I bis VIII je eine Plananlagefläche 5. Das besondere an der erfindungsgemäßen Spindelnase 1 ist hier nun, dass in als senkrecht zu der Ebene der Plananlageflächen 5 verlaufenden Sacklochbohrungen ausgebildeten Aufnahmebohrungen 6 (vergleiche Figur 3 und Figur 4) Sensoren 7 angeordnet sind, die auf den Plananlageflächen 5 lastende Kräfte bzw. Verformungen des Materials erfassen können. Diese Sensoren 7 sind hier zylinderförmig gestaltet und passgenau in die Aufnahmebohrungen 6 eingesetzt und dort festgelegt. Die Aufnahmebohrungen 6 sind dabei von der dem Aufnahmeende gegenüberliegenden Rückseite (vergleiche Ansicht Figur 2) her in das Material der Wand 3 geführt bis und enden dort z.B. in einem Abstand von 3 bis 15 mm, insbesondere 10 bis 15 mm, insbesondere 12 mm, unterhalb der jeweiligen Plananlagefläche 5, der sie zugeordnet sind. Die Sensoren 7 können insbesondere mit Dehnungsmessstreifen (DMS) gebildet sein. Sie sind dabei so angeordnet, dass Ihre Längsachsen einen gedachten, über die Ebene der Plananlageflächen 5 gezogenen Kreis, der konzentrisch zu dem Umfang der Spindelnase 1 gebildet ist, liegen. Zudem liegen jeweils zwei Aufnahmebohrungen 6 paarweise diametral einander gegen über.

Gemäß einer Option der Erfindung weist das hier gezeigte Ausführungsbeispiel einer Spindelnase 1 neben den Sensoren 7 weitere, in zusätzlichen Sacklochbohrungen 9, die in gleicher Weise von der Rückseite der Spindelnase 1 her in das Material der Wand 3 geführt sind, wie die Aufnahmebohrungen 6, und die ebenfalls bis unter die Plananlageflächen 5 führen, denen sie jeweils zugeordnet sind, angeordnete Messfühler 8 auf. Auch diese Messfühler 8 können in gleicher Weise wie die Sensoren 7 als zylinderförmige Messfühler 8 ausgebildet sein, die passgenau in den Sacklochbohrungen 9 angeordnet sind. Auch hier kann es sich wieder um mit Dehnungsmessstreifen (DMS) gebildete Messfühler 8 handeln. Diese zusätzlichen Messfühler 8 dienen in einer von den Sensoren 7 separaten Verschaltungen der Erfassung weiterer Messgrößen, wie nachstehend noch beschrieben werden wird.

Insbesondere sind die Sensoren 7 alle gleichartig, d.h. von identischem Typ und mit gleicher Empfindlichkeit, gebildet, können auch die Messfühler 8 gleichartige Bauteile wie die Sensoren 7 sein.

Das weiterhin Besondere an der erfindungsgemäßen Spindelnase 1 ist nun, dass sie eine Auswertung für die mit den Sensoren 7 aufgenommenen Signale, bei denen es sich um Änderungen des jeweiligen elektrischen Widerstandes der Sensoren 7 handelt, aufweist. Hierzu sind jeweils vier der Sensoren 7 in einer Vollbrücke verschaltet bzw. werden für die Auswertung der in solcher Weise verschaltet, und zwar wie in Figur 5 mit der dort dargestellten Vollbrücke 10 gezeigt. Die in Figur 5 gezeigte Vollbrücke 10 weist, wie dies für derartige Schaltungen üblich ist, zwei parallele Brückenzweige auf. In einem ersten Brückenzweig sind ein Widerstand R1 und ein weiterer Widerstand R4 in Reihe geschaltet, parallel dazu sind in analoger Schaltreihenfolge in dem zweiten Brückenzweig ein Widerstand R3 und ein Widerstand R2 in Reihe geschaltet. In der erfindungsgemäßen Spindelnase 1 sind die Sensoren 7 dabei wie folgt mit den in Figur 5 gezeigten Widerständen R1 bis R4 gleichzusetzen: In einer ersten solchen Brückenschaltung repräsentiert R1 den im Segment I angeordneten Sensor 7. R2 ist der im Segment II angeordnete Sensor 7. R3 ist der im Segment V angeordnete Sensor 7, und R4 stellt den im Segment VI angeordneten Sensor 7 dar.

In einer zweiten Vollbrücke 10 ist der Sensor 7 im Segment VII dem Widerstand R1 gleichzusetzen, bildet der Sensor 7 im Segment VIII den Widerstand R2. Der Widerstand R3 wird in dieser Vollbrücke dann durch den im Segment III angeordneten Sensor 7 gebildet; der Sensor 7 im Segment IV, schließlich, ist in der zweiten Vollbrücke der Widerstand R4.

Durch diese spezielle Verschaltung wird erreicht, dass bei einer aufliegenden, senkrecht zu der Plananlage 5 in Richtung von dem Anlageende wegweisenden Kraftkomponente, die zu einer Stauchung der Sensoren 7 führt, die Sensoren 7 in den Segmenten I, II, VII und VIII in der Brückenkombination einen Beitrag mit positivem Vorzeichen ergeben, die Sensoren 7 in den Segmenten III, VI, V und VI einen Beitrag mit negativem Vorzeichen erbringen.

Diese Verschaltung erlaubt dann zwar keine Auswertung im Hinblick auf eine gleichmäßig auflastende Axialkraft, da sich die jeweiligen Beiträge aufheben, keine Brückenverstellung festgestellt werden kann. Sie erlaubt allerdings die Feststellung von im Arbeitsbetrieb, insbesondere bei rotierender, aber auch bei stillstehender Spindelnase 1, auftretenden Querkräften bzw. Biegemomenten, die zu einer ungleichen Verteilung der senkrecht zu den Planauflagen, also in Richtung einer Rotationsachse der Spindel, wirkenden Axialkraftkomponenten führt. Somit kann mit dieser Sensoranordnung und -verschaltung zugleich auch die Erfassung entsprechender Querkräfte bzw. Biegemomente erfolgen, die dann wiederum nach an sich bekannten Verfahren zum Beispiel für die Feststellung eines Werkzeugverschleißes oder eines Werkzeugbruches oder einer sonstigen Anomalie herangezogen werden kann. Diese Gestaltung ermöglicht darüber hinaus grundsätzlich auch das Detektieren von ungleichmäßigen Andrücken, wie sie bei einer nicht exakten, insbesondere verkanteter Werkzeugeinspannung entstehen, wie sie beispielsweise durch das Vorhandensein eines Fremdkörpers in der Werkzeugaufnahme, zum Beispiel eines dorthin gelangten Spans, erfolgen kann. So kann im, aber auch im dynamischen statischen Zustand mit einer erfindungsgemäßen Spindelnase 1 im Anschluss an einen Spannvorgang eines Werkzeuges eine nicht korrekte Werkzeugeinspannung, zum Beispiel nach einem Werkzeugwechsel, detektiert werden.

Wie auf eine nicht korrekte Werkzeugeinspannung rückgeschlossen werden kann, veranschaulichen die Darstellungen in den Figuren 6 und 7. Dort sind - aufgenommen an einer Versuchsanordnung mit bewusst in die Werkzeugaufnahme eingebrachtem Fremdkörper - die mit den in den einzelnen Segmenten angeordneten Sensoren 7 erhaltenen Messwerte für deren Widerstände dargestellt, wobei in Fig. 6 die durch die erfindungsgemäße Verschaltung in der Vollbrücke 10 erhaltenen Vorzeichen berücksichtigt sind. In Fig. 7 ist eine rein betragsmäßige Darstellung dieser Messwerte vorgenommen, die dann sehr gut erkennen lässt, dass diese Messwerte von aufgrund der symmetrischen Anordnung der gleichartigen Sensoren 7 zu erwartenden gleichen Werten abweichend unterschiedliche Werte einnehmen. Dies deutet auf eine ungleiche Belastung der Plananlageflächen 5 aufgrund einer nicht korrekten Werkzeugspannung hin und wird so ausgewertet.

Um in dem gezeigten Ausführungsbeispiel auch Rückschlüsse auf eine (gleichmäßig) auflastende Axialkraft erhalten zu können, sind die weiteren Messfühler 8 eingesetzt. Diese sind in - an sich bekannter - Verschaltung so miteinander gekoppelt, dass (gleichmäßig) auflastende Axialkräfte zum Beispiel zu einer Verstimmung einer mit den Messfühlern 8 gebildeten Brückenschaltung führen, so dass Rückschlüsse auf solche Axialkräfte genommen werden können. Durch diese zusätzliche Ausrüstung erlaubt die erfindungsgemäße Spindelnase 1 also die Überwachung auch dieses Parameters in Echtzeit.

Die Resultate bzw. Daten der Auswertung, die beispielsweise durch eine in den Figuren nicht näher dargestellte, auf der Spindelnase 1 angeordnete chipintegrierte Recheneinheit erfolgen kann, werden über ein ebenfalls nicht eingezeichnetes drahtlos arbeitendes Telemetriemodul, welches sich auf der Spindelnase 1 befindet, zum Beispiel ein RFID-Transponder, an einen gegenüber der Spindelnase 1 feststehenden Empfänger übermittelt, der sie dann für eine weitere Auswertung und Anzeige zum Beispiel einer Maschinensteuerung der Werkzeugmaschine übergeben kann. So können basierend auf diesen Daten in der Maschinensteuerung Warnmeldungen generiert oder Aktionen ausgelöst werden. Wird zum Beispiel mit der erfindungsgemäßen Spindelnase 1 und der darin integrierten Sensorik eine nicht korrekte Werkzeugeinspannung festgestellt, so kann die Maschinensteuerung veranlassen, dass automatisiert das Werkzeug noch einmal ausgewechselt und Werkzeugkegelschaft sowie Werkzeugaufnahme zum Beispiel mit Druckluft ab- bzw. ausgeblasen werden, um einen möglicherweise dort vorhandenen Span oder einen anderen Fremdkörper zu entfernen, bevor das Werkzeug erneut eingesetzt wird. Ergibt ein solches Vorgehen nach wie vor eine Messung einer Fehleinspannung, so kann ein Alarm ausgegeben werden, damit ein Maschinenführer den Fehler überprüft und behebt.

Auch die Energieversorgung für die auf der erfindungsgemäßen Spindelnase 1 angeordneten Elemente erfolgt mit Vorteil drahtlos, indem zum Beispiel über abgestrahlte elektromagnetische Wellen eine Induktionspannung in einer an der Spindelnase 1 angeordneten Induktivität erzeugt wird. Ergänzend oder Alternativ kann aber auch ein Speicher für elektrische Energie auf er Spindelnase 1 angeordnet sein, wie eine Batterie, ein Akkumulator, ein Kondensator oder dergleichen.

Das vorstehend beschriebene Ausführungsbeispiel zeigt eine mögliche Umsetzung der Erfindung, bei der acht Segmente vorgesehen sind, in denen in Sacklochbohrungen Sensoren angeordnet sind, die zu Vollbrücken verschaltet sind. Andere Lösungen sind aber auch denkbar. So können weniger (oder auch mehr) als acht Segmente vorgesehen sein und können, anstelle je vier Sensoren zu Vollbrücken zu verschalten, auch je zwei Sensoren zu einer Halbbrücke zusammengefasst und entsprechend ausgewertet werden.

Aus der vorstehenden Beschreibung der Ausführungsbeispiele ist noch einmal der erheblichen Nutzen deutlich geworden, den die erfindungsgemäß gebildete Spindelnase 1 mit sich bringt, indem sie die Überwachung mehrerer Betriebsparameter im statischen und dynamischen Zustand der Spindelnase 1 bzw. einer mit dieser ausgestatteten Werkzeugspindel einer Werkzeugmaschine ermöglicht, ohne dass für diese Maßnahme etwa zusätzlicher Bauraum erforderlich wäre oder dass gesonderte Teile in Form von Adapterstücken an der Spindelnase 1 bzw. an der Werkzeugspindel anzubringen wären.

### Bezugszeichenliste

- 1: Spindelnase
- 2: Kegelaufnahme
- 3: Wand
- 4: Anlagerand
- 5: Plananlagefläche
- 6: Aufnahmebohrung
- 7: Sensor
- 8: Messfühler
- 9: Sacklochbohrung
- 10: Vollbrücke
- I: Segment
- II: Segment
- III: Segment
- IV: Segment
- V: Segment
- VI: Segment
- VII: Segment
- VIII: Segment
- L: Längsrichtung (Richtung der Längsachse)
- R1-R4: Widerstand

## Patentansprüche

1. Spindelnase (1) für eine Werkzeugspindel einer Werkzeugmaschine, wobei die Spindelnase (1) eine Längsachse und ein Aufnahmeende aufweist, an dem eine sich in Richtung der Längsachse und von dem Aufnahmeende weg konisch verjüngende Kegelaufnahme (2) für die Aufnahme eines Werkzeugschaftkegels mündet, wobei die Kegelaufnahme (2) von einer umlaufenden Wand (3) umgeben ist, die am Aufnahmeende einen umlaufenden Anlagerand (4) ausbildet, wobei der Anlagerand (4) Plananlageflächen (5) aufweist, an denen Anlageflächen des Werkzeugschaftkegels bei in der Werkzeugspindel eingespanntem Werkzeug anliegen, **dadurch gekennzeichnet, dass** in der Wand (3) Aufnahmebohrungen (6) in Form von senkrecht zu den Plananlageflächen (5) geführten, unterhalb der Plananlageflächen (5) endendenden Sacklochbohrungen gebildet sind, wobei der Anlagerand (4) in wenigstens vier winkelgleiche Segmente (I, II, III, IV, V, VI, VII, VIII) unterteilt und in wenigstens vier der Segmente (I, II, III, IV, V, VI, VII, VIII) wenigstens eine Aufnahmebohrung (6) derart gebildet ist, dass sich je zwei so gebildete Aufnahmebohrungen (6) diametral gegenüberliegen, wobei in jeder der Aufnahmebohrungen (6) je ein für in Richtung der Erstreckung der Aufnahmebohrung (6) auftretende Kräfte und/oder Verformungen empfindlicher, abhängig von derartigen Kräften und/oder Verformungen einen Messwert einer Messgröße, insbesondere seinen elektrischen Widerstand (R1, R2, R3, R4), ändernder Sensor (7) angeordnet ist, wobei eine Auswertung vorgesehen ist, in der die Sensoren, insbesondere jeweils diametral einander gegenüberliegende Sensoren, bei einer in Richtung entlang der Längsachse weisenden auflastenden Kraft bzw. Verformung einen Beitrag mit unterschiedlichen mathematischen Vorzeichen liefern.

2. Spindelnase (1) nach Anspruch 1, **dadurch gekennzeichnet, dass** sich je zwei der Aufnahmebohrungen (6) paarweise diametral gegenüberliegen und dass wenigstens zwei in aneinander angrenzenden ersten Segmenten (I, II, V, VI) angeordnete Sensoren (7) einen Beitrag mit einem ersten Vorzeichen, + bzw. -, liefern, wenigstens zwei in einander angrenzenden zweiten, von den ersten Segmenten (I, II, V, VI) verschiedenen Segmenten (III, IV, VII, VIII) angeordnete Sensoren (7) einen Beitrag mit einem zweiten, zu dem ersten Vorzeichen entgegengesetztem Vorzeichen,. - bzw. +, liefern.

3. Spindelnase (1) nach einem der Ansprüche 1 oder 2, **dadurch gekennzeichnet, dass** der Anlagerand (4) in wenigstens acht winkelgleiche Segmente (I, II, III, IV, V, VI, VII, VIII) unterteilt und in jedem der Segmente (I, II, III, IV, V, VI, VII, VIII) wenigstens eine Aufnahmebohrung (6) derart gebildet ist, dass sich je zwei so gebildete Aufnahmebohrungen (6) paarweise diametral gegenüberliegen, wobei in jeder der Aufnahmebohrungen (6) je ein für in Richtung der Erstreckung der Aufnahmebohrung (6) auftretende Kräfte und/oder Verformungen empfindlicher, abhängig von derartigen Kräften und/oder Verformungen seinen elektrischen Widerstand (R1, R2, R3, R4) ändernder Sensor (7) angeordnet ist, wobei eine Auswertung vorgesehen ist, in der je vier der Sensoren (7) derart zu einer Vollbrücke (10) elektrisch oder logisch verschaltet ausgewertet werden, dass in je zwei einander diametral gegenüberliegenden Aufnahmebohrungen (6) in paarweise benachbarten Segmenten angeordnete Sensoren (6) in den parallelen Zweigen der Vollbrücke (10) derart verschaltet sind, dass in einem ersten Zweig der Brücke (10) ein in einer ersten der Aufnahmebohrungen (6) angeordneter erster Sensor (7) mit einem in einem zu dem Segment, in dem ein in einer zweiten, der ersten Aufnahmebohrung (6) diametral gegenüberliegenden zweiten der Aufnahmebohrungen (6) aufgenommenen zweiter Sensor (7) angeordnet ist, benachbarten Segment gelegenen dritten der Aufnahmebohrungen (6) angeordneten dritten Sensor (7) in Reihe geschaltet ist und dass in einem zweiten Zweig der Vollbrücke (10) parallel zu dem ersten Sensor (7) ein in einer der ersten Aufnahmebohrung (6) diametral gegenüberliegenden vierten der Aufnahmebohrungen (6) angeordneter vierter Sensor (7) mit dem zweiten Sensor (7) in Reihe geschaltet ist.

4. Spindelnase (1) nach einem der vorhergehenden Ansprüche, **dadurch gekennzeichnet, dass** die Aufnahmebohrungen (6) in Richtung (L) der Längsachse verlaufen.

5. Spindelnase (1) nach einem der vorhergehenden Ansprüche, **dadurch gekennzeichnet, dass** die Aufnahmebohrungen (6) derart angeordnet sind, dass sie mit ihren Mittelachsen eine gemeinsamen Umfangslinie eines zu einer Mittellängsachse der Spindelnase (1) konzentrischen Kreises schneiden.

6. Spindelnase (1) nach Anspruch 5, **dadurch gekennzeichnet, dass** die Mittelachsen der Aufnahmebohrungen (6) die Umfangslinie unter gleichen Winkelabständen zwischen den Mittelachsen benachbarter Aufnahmebohrungen (6) schneiden.

7. Spindelnase (1) nach einem der vorhergehenden Ansprüche, **dadurch gekennzeichnet, dass** die Sensoren (7) solche identischer Art sind.

8. Spindelnase (1) nach einem der vorhergehenden Ansprüche, **dadurch gekennzeichnet, dass** die Sensoren (7) zylinderförmige Dehnungssensoren sind, die Verformungen in ihrer axialen Richtung detektieren.

9. Spindelnase (1) nach einem der vorhergehenden Ansprüche, **dadurch gekennzeichnet, dass** zusätzlich zu den Aufnahmebohrungen (6) weitere Sacklochbohrungen (9) senkrecht zu den Plananlageflächen (5) von der dem Aufnahmeende gegenüberliegenden Seite an die Plananlageflächen (5) herangeführt sind, in denen zusätzliche Messfühler (8) angeordnet sind, wobei diese Messfühler (8) unabhängig von den Sensoren (7) zum Erfassen weiterer Messgrößen verschaltet sind.

10. Spindelnase (1) nach einem der vorhergehenden Ansprüche, **gekennzeichnet durch** Übertragungsmittel zum drahtlosen Übertragen von mit den Sensoren (7) und ggf. weiteren angeordneten Messfühlern (8) erfassten Messdaten an eine außerhalb der Spindelnase (1) angeordnete Empfängereinheit.

11. Spindelnase (1) nach einem der vorhergehenden Ansprüche, **gekennzeichnet durch** ein Energieversorgungsmodul zur Versorgung der Sensoren (7) und ggf. weiterer auf der Spindelnase (1) angeordneter Verbraucher mittels drahtlos erhaltener Energie.

12. Spindelnase (1) nach einem der vorhergehenden Ansprüche, **gekennzeichnet durch** einen auf der Spindelnase (1) angeordneten Energiespeicher zum Speichern elektrischer Energie.

13. Spindelnase (1) nach einem der vorhergehenden Ansprüche, **dadurch gekennzeichnet, dass** die Aufnahmebohrungen (6) 3 bis 15 mm unterhalb der Plananlageflächen (5) enden.

14. Werkzeugspindel für eine Werkzeugmaschine mit einem Stator und einem Rotor und mit einer an einem Vorderende des Rotors angeordneten Spindelnase (1) nach einem der vorhergehenden Ansprüche.

## Claims

1. A spindle nose (1) for a tool spindle of a machine tool, wherein the spindle nose (1) has a longitudinal axis and a receiving end at which a conical receiver (2) for receiving a tool shank cone opens out conically in the direction of the longitudinal axis and away from the receiving end, wherein the conical receiver (2) is surrounded by a peripheral wall (3) which forms a peripheral abutment edge (4) at the receiving end, wherein the contact edge (4) has plane contact surfaces (5) against which contact surfaces of the tool shank cone rest when the tool is clamped in the tool spindle, **characterised in that** receiving bores (6) in the form of blind bores which are guided perpendicularly to the plane contact surfaces (5) and end below the plane contact surfaces (5) are formed in the wall (3), wherein the contact edge (4) is subdivided into at least four segments (I, II, III, IV, V, VI, VII, VIII) of equal angle and in at least four of the segments (I, II, III, IV, V, VI, VII, VIII) at least one receiving bore (6) is formed in such a way that two receiving bores (6) formed in this way are diametrically opposite each other, wherein in each of the receiving bores (6) one is more sensitive to forces and/or deformations occurring in the direction of the extension of the receiving bore (6), depending on such forces and/or deformations, a sensor (7) changing a measured value of a measured variable, in particular its electrical resistance (R1, R2, R3, R4), is arranged, wherein an evaluation is provided in which the sensors, in particular sensors which are in each case diametrically opposite one another, are arranged in the event of a load-bearing force or deformation pointing in the direction along the longitudinal axis. deformation pointing in a direction along the longitudinal axis.

2. The spindle nose (1) according to claim 1, **characterised in that** two of the receiving bores (6) are diametrically opposite each other in pairs and that at least two sensors (7) arranged in first segments (I, II, V, VI) adjoining each other have a contribution with a first sign, + or -at least two sensors (7) arranged in adjacent second segments (III, IV, VII, VIII) different from the first segments (I, II, V, VI) provide a contribution with a second sign, - or + , respectively, opposite to the first sign.

3. The spindle nose (1) according to one of the claims or 2, **characterised in that** the contact edge (4) is divided into at least eight segments (I, II, III, IV, V, VI, VII, VIII) of equal angle and in each of the segments (I, II, III, IV, V, VI, VII, VIII) at least one receiving bore (6) is formed in such a way that two receiving bores (6) formed in this way are diametrically opposed in pairs, wherein in each of the receiving bores (6) a sensor (7) sensitive to forces and/or deformations occurring in the direction of the extension of the receiving bore (6) and changing its electrical resistance (R1, R2, R3, R4) as a function of such forces and/or deformations is arranged in each of the receiving bores (6), wherein an evaluation is provided in which four of the sensors (7) each are evaluated electrically or logically connected in such a way to form a full bridge (10), **in that** sensors (6) arranged in two diametrically opposite receiving bores (6) in segments adjacent to each other in pairs are connected in the parallel branches of the full bridge (10) in such a way that a first sensor (7) arranged in a first of the receiving bores (6) is connected in a first branch of the bridge (10) to a second sensor (7) arranged in a second of the receiving bores (6) diametrically opposite the first receiving bore (6), the third of the receiving bores (6) arranged in the third segment adjacent to the first sensor (7) is connected in series and that in a second branch of the full bridge (10) parallel to the first sensor (7) a fourth sensor (7) arranged in a fourth of the receiving bores (6) diametrically opposite the first receiving bore (6) is connected in series with the second sensor (7).

4. The spindle nose (1) according to one of the preceding claims, **characterised in that** the receiving bores (6) run in the direction (L) of the longitudinal axis.

5. The spindle nose (1) according to one of the preceding claims, **characterised in that** the receiving bores (6) are arranged in such a way that they intersect with their central axes a common circumferential line of a circle concentric to a central longitudinal axis of the spindle nose (1).

6. The spindle nose (1) according to claim 5, **characterised in that** the centre axes of the receiving bores (6) intersect the circumference at equal angular distances between the centre axes of adjacent receiving bores (6).

7. The spindle nose (1) according to one of the preceding claims, **characterised in that** the sensors (7) are of the same type.

8. The spindle nose (1) according to one of the preceding claims, **characterised in that** the sensors (7) are cylindrical strain sensors which detect deformations in their axial direction.

9. The spindle nose (1) according to one of the preceding claims, **characterised in that** in addition to the receiving bores (6), further blind bores (9) are led perpendicularly to the plane contact surfaces (5) from the side opposite the receiving end to the plane contact surfaces (5) in which additional measuring sensors (8) are arranged, these measuring sensors (8) being connected independently of the sensors (7) for detecting further measured variables.

10. The spindle nose (1) according to one of the preceding claims, **characterised by** transmission means for wirelessly transmitting measurement data acquired with the sensors (7) and possibly further arranged measuring sensors (8) to a receiver unit arranged outside the spindle nose (1).

11. The spindle nose (1) according to one of the preceding claims, **characterised by** a power supply module for supplying the sensors (7) and possibly further consumers arranged on the spindle nose (1) by means of wirelessly received energy.

12. The spindle nose (1) according to one of the preceding claims, **characterised by** an energy storage device arranged on the spindle nose (1) for storing electrical energy.

13. The spindle nose (1) according to one of the preceding claims, **characterised in that** the receiving bores (6) end 3 to 15 mm below the plane contact surfaces (5).

14. A tool spindle for a machine tool comprising a stator and a rotor and having a spindle nose (1) arranged at a front end of the rotor according to any of the foregoing claims.

## Revendications

1. Nez de broche (1) pour une broche d'outil d'une machine-outil, le nez de broche (1) présentant un axe longitudinal et une extrémité de réception sur laquelle un logement conique (2) destiné à recevoir un cône de tige d'outil s'ouvre de manière conique dans la direction de l'axe longitudinal et en s'éloignant de l'extrémité de réception, le logement conique (2) étant entouré par une paroi périphérique (3) qui forme une arête d'appui périphérique (4) à l'extrémité de réception, l'arête de contact (4) présentant des surfaces de contact planes (5) contre lesquelles s'appuient les surfaces de contact du cône de la tige de l'outil lorsque l'outil est serré dans la broche de l'outil, **caractérisé en ce que** dans la paroi (3) sont formés des trous de réception (6) sous forme de trous borgnes qui sont guidés perpendiculairement aux surfaces de contact planes (5) et qui se terminent en dessous des surfaces de contact planes (5), l'arête de contact (4) étant divisée en au moins quatre segments (I, II, III, IV, V, VI, VII, VIII) d'angle égal et dans au moins quatre des segments (I, II, III, IV, V, VI, VII, VIII) au moins un alésage de réception (6) est formé de telle sorte que deux trous de réception (6) ainsi formés sont diamétralement opposés l'un à l'autre, dans chacun des trous de réception (6) on est plus sensible aux forces et/ou déformations se produisant dans la direction de l'extension du trou de réception (6), en fonction de telles forces et/ou déformations, un capteur (7) modifiant une valeur de mesure d'une grandeur de mesure, en particulier sa résistance électrique (R1, R2, R3, R4), est disposé, une évaluation étant prévue, dans laquelle les capteurs, en particulier les capteurs qui sont respectivement diamétralement opposés, sont disposés dans le cas d'une force portante ou d'une déformation orientée dans la direction de l'axe longitudinal. déformation pointant dans une direction le long de l'axe longitudinal.

2. Nez de broche (1) selon la revendication 1, **caractérisé en ce que** deux des trous de réception (6) sont diamétralement opposés par paires et qu'au moins deux capteurs (7) disposés dans des premiers segments (I, II, V, VI) adjacents l'un à l'autre présentent une contribution avec un premier signe, + ou -, au moins deux capteurs (7) disposés dans des deuxièmes segments adjacents (III, IV, VII, VIII) différents des premiers segments (I, II, V, VI) présentent une contribution avec un deuxième signe, - ou +, respectivement, opposé au premier signe.

3. Nez de broche (1) selon l'une des revendications 1 ou 2, **caractérisé en ce que** l'arête de contact (4) est divisée en au moins huit segments (I, II, III, IV, V, VI, VII, VIII) d'angle égal et dans chacun des segments (I, II, III, IV, V, VI, VII, VIII) au moins un alésage de réception (6) est formé de telle manière que deux trous de réception (6) ainsi formés sont diamétralement opposés par paires, un capteur (7) sensible aux forces et/ou déformations se produisant dans la direction de l'extension du trou de réception (6) et modifiant sa résistance électrique (R1, R2, R3, R4) en fonction de ces forces et/ou déformations est disposé dans chacun des trous de réception (6), une évaluation étant prévue, dans laquelle quatre des capteurs (7) sont chacun évalués en étant reliés électriquement ou logiquement de manière à former un pont complet (10), **en ce que** des capteurs (6) disposés dans deux trous de réception (6) diamétralement opposés, dans des segments voisins par paires, sont reliés dans les branches parallèles du pont complet (10) de telle sorte qu'un premier capteur (7) disposé dans un premier des trous de réception (6) est relié dans une première branche du pont (10) à un deuxième capteur (7) disposé dans un deuxième des trous de réception (6) diamétralement opposé au premier alésage de réception (6), le troisième des trous de réception (6) disposés dans le troisième segment adjacent au premier capteur (7) est monté en série et que dans une deuxième branche du pont complet (10) parallèle au premier capteur (7) un quatrième capteur (7) disposé dans un quatrième des trous de réception (6) diamétralement opposé au premier alésage de réception (6) est monté en série avec le deuxième capteur (7).

4. Nez de broche (1) selon l'une des revendications précédentes, **caractérisé en ce que** les trous récepteurs (6) s'étendent dans la direction (L) de l'axe longitudinal.

5. Nez de broche (1) selon l'une des revendications précédentes, **caractérisé en ce que** les trous récepteurs (6) sont disposés de telle sorte qu'ils coupent avec leurs axes centraux une ligne circonférentielle commune d'un cercle concentrique à un axe longitudinal central du nez de broche (1).

6. Nez de broche (1) selon la revendication 5, **caractérisé en ce que** les axes centraux des trous de réception (6) coupent la circonférence à des distances angulaires égales entre les axes centraux des trous de réception (6) adjacents.

7. Nez de broche (1) selon l'une des revendications précédentes, **caractérisé par le fait que** les capteurs (7) sont du même type.

8. Nez de broche (1) selon l'une des revendications précédentes, **caractérisé en ce que** les capteurs (7) sont des capteurs de contrainte cylindriques qui détectent les déformations dans leur direction axiale.

9. Nez de broche (1) selon l'une des revendications précédentes, **caractérisé en ce qu'**en plus des trous de réception (6), d'autres trous borgnes (9) sont conduits perpendiculairement aux surfaces de contact planes (5) du côté opposé à l'extrémité de réception vers les surfaces de contact planes (5) dans lesquelles sont disposés des capteurs de mesure supplémentaires (8), ces capteurs de mesure (8) étant connectés indépendamment des capteurs (7) pour la détection d'autres grandeurs de mesure.

10. Nez de broche (1) selon l'une des revendications précédentes, **caractérisé par** des moyens de transmission pour transmettre sans fil des données de mesure acquises avec les capteurs (7) et éventuellement d'autres capteurs de mesure (8) à une unité de réception disposée à l'extérieur du nez de broche (1).

11. Nez de broche (1) selon l'une des revendications précédentes, **caractérisé par** un module d'alimentation électrique pour alimenter les capteurs (7) et éventuellement d'autres consommateurs disposés sur le nez de broche (1) au moyen d'énergie reçue sans fil.

12. Nez de broche (1) selon l'une des revendications précédentes, **caractérisé par** un dispositif de stockage d'énergie disposé sur le nez de broche (1) pour stocker l'énergie électrique.

13. Nez de broche (1) selon l'une des revendications précédentes, **caractérisé en ce que** les trous de réception (6) se terminent 3 à 15 mm en dessous des surfaces de contact planes (5).

14. Broche d'outil pour une machine-outil comprenant un stator et un rotor et ayant un nez de broche (1) disposé à une extrémité avant du rotor selon l'une des revendications précédentes.
